Europäisches Patentamt

European Patent Office

Office européen des brevets

(11) Numéro de publication: **0 404 688**
**A1**

## (12) DEMANDE DE BREVET EUROPEEN

(21) Numéro de dépôt: **90401773.8**

(22) Date de dépôt: **22.06.90**

(51) Int. Cl.⁵: **A47J 31/057, A47J 31/44**

(30) Priorité: **23.06.89 FR 8908402**

(43) Date de publication de la demande:
**27.12.90 Bulletin 90/52**

(84) Etats contractants désignés:
**BE DE GB IT NL**

(71) Demandeur: **SEB S.A.**

**F-21260 Selongey(FR)**

(72) Inventeur: **De Carpentier, Hubert**
**8 Place Bossuet**
**F-21000 Dijon(FR)**

(74) Mandataire: **Bouju, André**
**Cabinet Bouju 38 avenue de la Grande**
**Armée**
**F-75017 Paris(FR)**

(54) Réservoir d'eau amovible pour appareil ménager et appareil ménager comportant un tel réservoir.

(57) Le réservoir d'eau (9) est destiné à être placé sur un socle (2) de l'appareil (1) au voisinage du corps (3) de celui-ci. Il comporte à sa partie supérieure un couvercle mobile (10).

Le couvercle (10) est conformé de façon à, dans sa position ouverte, faire office d'anse pour la manipulation du réservoir (9).

Utilisation notamment pour les appareils ménagers produisant de l'eau très chaude ou de la vapeur, en particulier pour les cafetières électriques.

FIG.1

EP 0 404 688 A1

**Réservoir d'eau amovible pour appareil ménager et appareil ménager comportant un tel réservoir.**

La présente invention concerne un réservoir d'eau amovible pour appareil ménager, notamment pour cafetière électrique.

La présente invention concerne également un appareil ménager comportant un tel réservoir d'eau amovible.

On connaît de nombreux appareils ménagers, en général électriques, produisant de l'eau très chaude ou de la vapeur, notamment des cafetières électriques.

Ces appareils comportent un réservoir d'eau en communication avec une chambre de chauffage ou de vaporisation de l'eau, et fermé par un couvercle mobile ou amovible.

Certains appareils présentent un réservoir d'eau fixe qu'il faut remplir avec un autre récipient, ce qui est peu pratique.

D'autres appareils présentent un réservoir d'eau amovible qui comporte en son fond, une ouverture fermée par un clapet, lequel est ouvert lorsque le réservoir est posé sur son socle.

Les réservoirs d'eau amovibles connus sont d'une manière générale peu commodes à utiliser, et relativement onéreux.

La présente invention a pour but de remédier aux inconvénients des réservoirs connus et de proposer un réservoir d'eau amovible de conception et de construction simples et économiques que l'on puisse porter en toute sécurité.

La présente invention a également pour but de proposer un appareil ménager comportant un tel réservoir d'eau amovible.

Le réservoir d'eau amovible pour appareil ménager, notamment pour cafetière électrique, visé par l'invention est destiné à être placé sur un socle de l'appareil au voisinage du corps de celui-ci et comporte à sa partie supérieure un couvercle mobile.

Suivant l'invention, ce réservoir est caractérisé en ce que le couvercle est conformé de façon à, dans sa position ouverte, faire office d'anse pour la manipulation du réservoir.

Le couvercle faisant office d'anse, la structure du réservoir peut ainsi être très simple et économique et ne comporter, à l'exception du couvercle, aucun élément en saillie susceptible d'être encombrant ou gênant.

Selon une version avantageuse de l'invention, le réservoir présente du côté de l'appareil une paroi arquée concave qui entoure ledit corps le long d'une partie de la surface périphérique de celui-ci, et qui se prolonge latéralement par deux parois parallèles, et le couvercle présente un bord arqué correspondant qui forme, dans la position ouverte du couvercle, le bord inférieur de l'anse, et qui se prolonge par deux bords parallèles formant les bords des montants de l'anse.

Une telle configuration du réservoir d'eau amovible, qui est parfaitement adaptée à l'utilisation du couvercle comme anse, présente de nombreux avantages : ainsi, les deux parois parallèles servent de guides le long du corps de l'appareil pour présenter et placer le réservoir sur le socle de celui-ci ; par ailleurs, une telle configuration enveloppante permet de donner au réservoir une capacité relativement importante pour un encombrement radial relativement limité.

Selon une version préférée de l'invention, le couvercle est dimensionné de façon à s'insérer, dans sa position fermée, à l'intérieur des parois du réservoir.

Le réservoir ne présente ainsi aucune partie en saillie susceptible d'encombrer ou de gêner.

D'autres caractéristiques et avantages de l'invention apparaîtront encore dans la description ci-après.

Aux dessins annexés, donnés à titre d'exemples non limitatifs,

- la figure 1 est une vue schématique en perspective d'une cafetière électrique comportant un réservoir d'eau amovible conforme a l'invention, le couvercle de ce réservoir étant dans sa position ouverte ;

- la figure 2 est une vue de dessus du réservoir d'eau représenté à la figure 1 ;

- la figure 3 est une vue de dessous du couvercle du réservoir de la figure 2 ;

- la figure 4 est une vue agrandie en coupe suivant IV-IV à la figure 2 ;

- la figure 5 est une vue semblable à la figure 3 d'un autre mode de réalisation du couvercle.

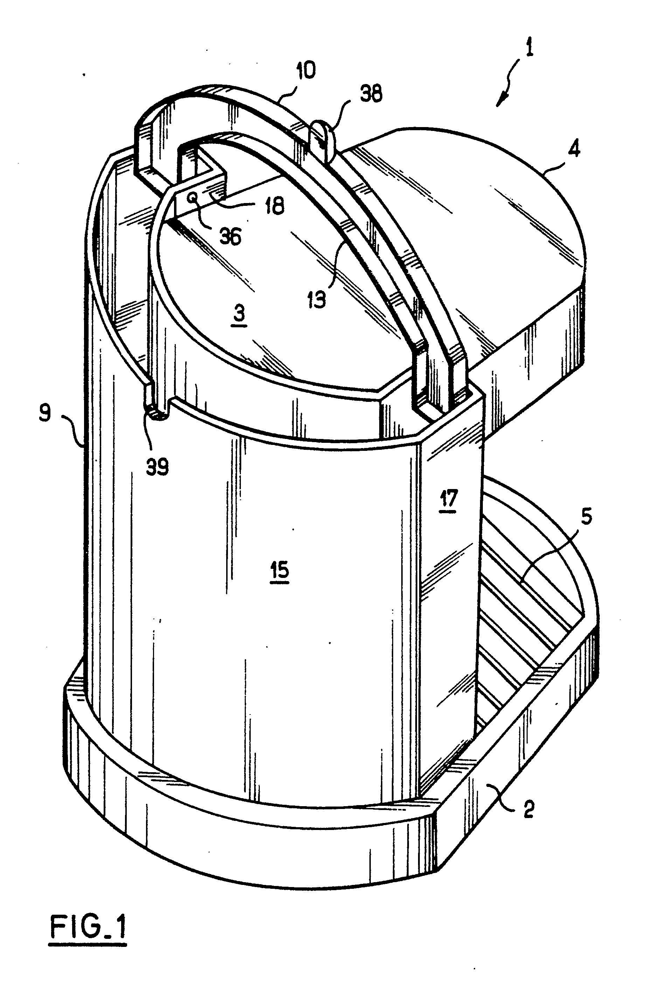

Dans la réalisation de la figure 1, et de façon connue, la cafetière électrique 1 comporte un socle 2 surmonté d'un corps 3 dont une partie en surplomb 4 est adaptée à recevoir une coupelle remplie de café et logée à l'extrémité d'une poignée (non représentée) qui s'adapte dans cette partie en surplomb 4.

Sous la partie en surplomb 4, le socle 2 comporte une grille 5 adaptée à recevoir un récipient (non représenté) pour recueillir le café.

De l'autre côté du corps 3 par rapport à la grille 5, le socle 2 reçoit un réservoir d'eau amovible 9 fermé à sa partie supérieure par un couvercle 10 qui pivote autour d'un axe sensiblement horizontal 11, et qui est conformé de façon à, dans sa position ouverte, faire office d'anse pour la manipulation du réservoir 9.

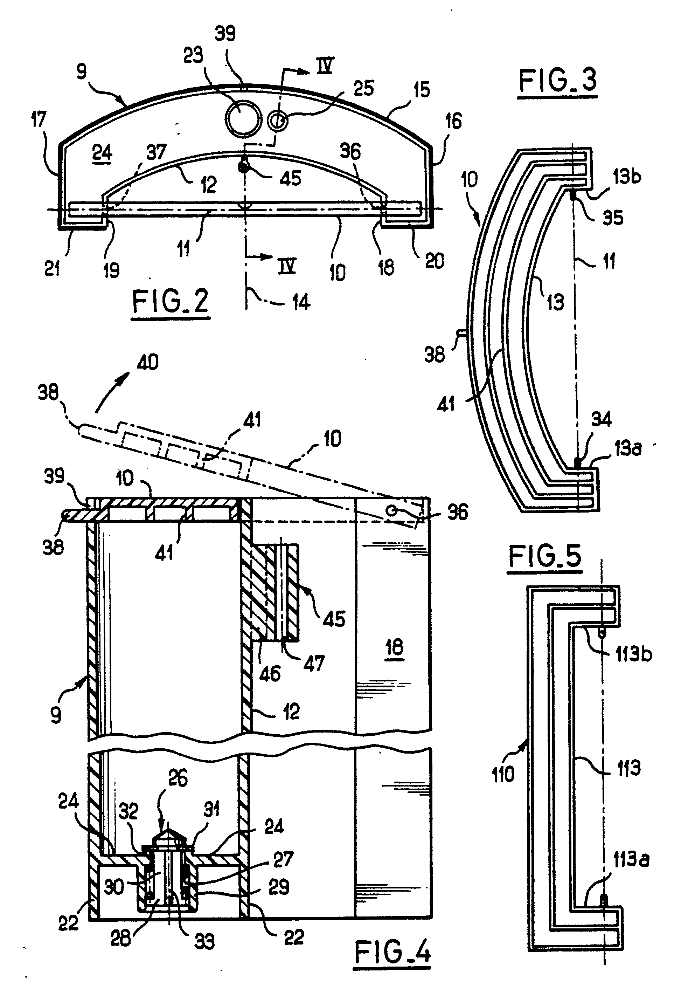

De façon plus précise, et comme on le voit aux figures 2 à 4, le réservoir 9 présente un plan de symétrie 14, et a en coupe transversale une forme générale en C limitée par deux parois périphériques arquées, une paroi arquée extérieure convexe 15 et une paroi arquée intérieure concave 12, qui se prolongent latéralement à leurs extrémités respectives par des parois, parallèles au plan de symétrie, extérieures 16, 17 et intérieures 18, 19 reliées elles-mêmes par des parois transversales 20, 21 (voir figure 2).

Cette forme particulière est avantageuse sur le plan esthétique, le réservoir 9 entourant le corps 3 de la cafetière 1 sur environ la moitié de la périphérie de celui-ci avec un encombrement radial limité (figure 1).

Cette forme en C du réservoir est également avantageuse sur le plan fonctionnel puisqu'elle permet de donner au réservoir 9 une capacité intérieure importante malgré un encombrement radial et une hauteur limités de celui-ci. En outre, les parois parallèles intérieures 18, 19 servent, avec la paroi 12, à guider le réservoir 9 le long des parois du corps 3 pour placer le réservoir sur le socle 2.

En supplément de cette fonction de guidage des parois 12, 18, 19, le réservoir 9 comporte d'autres moyens de guidage et centrage facilitant sa mise en place en position appropriée sur le socle 2 de la cafetière.

Comme représenté aux figures 2 et 4, ces moyens comprennent une nervure 45 en saillie par rapport à la face arquée concave 12 du réservoir 9 et destinée à s'engager dans une rainure conjuguée (non représentée) ménagée dans le corps 3. La nervure 45 comporte dans l'exemple représenté une âme 46 prolongée par une partie tubulaire 47 (figure 4).

Le réservoir 9 est ainsi placé sur le socle 2 dans la position appropriée pour permettre le passage de l'eau du réservoir 9 dans le socle 2 de la cafetière 1.

Le réservoir 9 présente à cet effet dans son fond 24 une ouverture 25 excentrée, fermée par un clapet 26 lorsque le réservoir 9 n'est pas posé sur le socle 2.

Le clapet 26, destiné à être soulevé vers le haut contre l'action d'un ressort 27 par un élément en saillie (non représenté) du socle, comporte un piston 28 mobile à l'intérieur d'une tubulure cylindrique 29 en saillie sous le fond 24. La tige 30 du piston 28 traverse l'ouverture 25 du fond 24 et porte au-dessus du fond 24 un joint élastique 31 appliqué sur un épaulement 32 du fond lorsque le réservoir n'est pas sur le socle 2. La tige 30 présente une gorge longitudinale 33 pour le passage de l'eau du réservoir 9 dans le socle 2 lorsque le clapet 26 est soulevé.

Cette structure du clapet 26, qui permet de vider presque complètement le réservoir d'eau 9, est rendue possible du fait que les parois latérales 12, 15, 16, 17, 18, 19, 20 et 21 de celui-ci se prolongent vers le bas au-delà du fond 24 pour former une nervure d'assise périphérique 22 très stable et qui permet d'éloigner le fond 24 du socle 2.

Le réservoir 9 est habituellement réalisé en matière plastique injectée sous pression, par exemple en copolymère styrène acrylonitrile. Les faces intérieures et extérieures des parois du réservoir présentent donc les dépouilles et contre-dépouilles nécessaires pour le démoulage. Par ailleurs, les faces extérieures des parois extérieures 15, 16, 17 peuvent comporter des nervures de raidissement, notamment des nervures horizontales.

Comme représenté en détail aux figures 2 à 4, le couvercle 10, qui est conformé de façon à s'insérer, en position fermée, à l'intérieur des parois latérales du réservoir 9, présente une forme générale en C. En particulier, son bord arqué concave 13 se prolonge latéralement par des bords parallèles 13a, 13b qui constituent les bords des montants de l'anse.

Ces bords parallèles 13a, 13b portent respectivement des tétons 34, 35 qui font saillie en direction l'un de l'autre pour s'encliqueter dans des ouvertures 36, 37 ménagées dans les deux parois parallèles 18, 19 du réservoir 9.

Ainsi, si le couvercle 10 se déforme légèrement sous le poids du réservoir 9 plein d'eau, cette déformation va dans le sens d'un resserrement, contre les parois parallèles 18, 19 du réservoir 9, des bords parallèles 13a, 13b du couvercle 10 qui portent les tétons 34, 35. Cette déformation aboutit donc à parfaire l'enfoncement des tétons 34, 35 dans les ouvertures conjuguées 36, 37.

Le couvercle 10 est retenu dans sa position fermée sensiblement horizontale, représentée en traits pleins à la figure 4, par un téton 38 en saillie vers l'extérieur qui est reçu dans une gorge correspondante 39 de la paroi extérieure 15 du réservoir 9. Le téton 38 est donc la seule partie du couvercle 10 qui dépasse des parois du réservoir 9 pour permettre de soulever le couvercle 10 de ladite position horizontale dans le sens de la flèche 40 de la figure 4, jusqu'à la position intermédiaire représentée en tirets à la figure 4 puis jusqu'à la position ouverte sensiblement verticale représentée à la figure 2.

Le couvercle 10 peut également être réalisé, en une matière plastique synthétique, par exemple en polycarbonate, par moulage ou injection sous pression, et comporte des nervures de raidissement 41 sur sa face tournée vers l'intérieur du réservoir 9 dans sa position fermée.

Dans la réalisation représentée à la figure 5, le couvercle 110 présente une forme générale rectangulaire. Son bord intérieur 113 est rectiligne et définit avec les bords parallèles 113a et 113b une anse rectangulaire. Un tel couvercle 110 peut bien entendu être monté sur un réservoir (non représenté) présentant une section transversale de même forme, ou sur un réservoir de section transversale rectangulaire dont le couvercle serait découpé en deux parties, la partie 110 montée pivotante par rapport aux parois du réservoir pour servir d'anse, et une seconde partie, non représentée, correspondant sensiblement à l'évidement de l'anse défini par les bords 113, 113a et 113b, indépendante de la première partie et montée de façon quelconque sur les parois du réservoir.

Bien entendu, l'invention n'est pas limitée au mode de réalisation que l'on vient de décrire, et on peut apporter à celui-ci de nombreux changements et modifications sans sortir du domaine de l'invention.

Ainsi, l'invention est applicable à d'autres formes du réservoir d'eau que celle décrite, et l'adaptation du couvercle sur le réservoir peut être réalisée d une manière et par des moyens différents de ceux décrits.

En particulier, on peut faire en sorte que le couvercle se compose de plusieurs parties dont au moins une est mobile pour servir d'anse ou de poignée.

De même, le terme concave utilisé dans la présente description doit s'entendre dans son sens le plus large, selon lequel le contour du couvercle, ou celui de la section droite du réservoir, n'est pas situé tout entier d'un même côté d'un côté ou d'une tangente quelconque, et présente, de façon plus précise, un évidement de contour quelconque, courbe ou polygonal, permettant le passage des doigts pour servir d'anse. L'invention recouvre également le cas où le couvercle ne présente pas d'évidement pour le passage des doigts, mais présente une saillie sensiblement perpendiculaire à sa surface et susceptible d'être saisie par les doigts pour permettre de porter le réservoir.

Enfin, le réservoir n'a pas besoin d'avoir la forme sensiblement cylindrique décrite ci-dessus et peut avoir une section droite dont la forme évolue entre le fond et le haut du réservoir : il suffit que la section droite de la partie haute du réservoir présente une forme susceptible de recevoir un couvercle conforme à l'invention.

**Revendications**

1. Réservoir d'eau (9) amovible pour appareil ménager (1), notamment pour cafetière électrique, ce réservoir (9) étant destiné à être placé sur un socle (2) de l'appareil (1) au voisinage du corps (3) de celui-ci, et comportant à sa partie supérieure un couvercle mobile (10). caractérisé en ce que le couvercle (10) est conformé de façon à, dans sa position ouverte, faire office d'anse pour la manipulation du réservoir (9).

2. Réservoir d'eau amovible (9) conforme à la revendication 1, caractérisé en ce qu'il présente du côté du corps (3) de l'appareil (1) une paroi concave (12) pour entourer ledit corps (3) le long d'une partie de la surface péripherique de celui-ci, et en ce que le couvercle (10) présente un bord concave (13) correspondant formant, dans la position ouverte du couvercle (10), le bord inférieur de l'anse.

3. Réservoir d'eau amovible (9) conforme à la revendication 2, caractérisé en ce que sa paroi concave (12) est une paroi arquée (12) qui se prolonge latéralement par deux parois parallèles (18, 19), et en ce que le bord concave (13) du couvercle (10) est un bord arqué (13) correspondant qui se prolonge par deux bords parallèles (13a, 13b) formant, dans la position ouverte du couvercle, les bords des montants de l'anse.

4. Réservoir d'eau amovible (9) conforme à l'une des revendications 1 à 3, caractérisé en ce que le couvercle (10) est fixé de manière pivotante au réservoir (9) par encliquetage de tétons (34, 35) dans des évidements (36, 37) correspondants, les tétons (34, 35) et les évidements (36, 37) étant situés les uns sur le réservoir (9), les autres sur le couvercle (10).

5. Réservoir d'eau amovible (9) conforme aux revendications 3 et 4, caractérisé en ce que les tétons (34, 35) font saillie en direction l'un de l'autre sur les bords parallèles (13a, 13b) du couvercle (10) pour s'encliqueter dans des ouvertures (36, 37) ménagées dans les deux parois parallèles (18,19) du reservoir (9).

6. Réservoir d'eau amovible (9) conforme à l'une des revendications 1 à 5, caractérisé en ce que le couvercle (10) est dimensionné de façon à s'insérer en position fermée à l'intérieur des parois du réservoir (9).

7. Appareil ménager (1), caractérisé en ce qu'il comporte un réservoir d'eau amovible (9) conforme à l'une quelconque des revendications précédentes.

FIG.1

FIG.2

FIG.3

FIG.4

FIG.5

Office européen
des brevets

RAPPORT DE RECHERCHE EUROPÉENNE

Numero de la demande

EP    90 40 1773

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-3503476 (BOSCH-SIEMENS HAUSGERATE GMBH)<br>* page 6, ligne 1 - page 9, ligne 7; figures 1-6 * | 1, 4 | A47J31/057<br>A47J31/44 |
| A | DE-A-3014493 (EMIDE-METALLINDUSTRIE GEBR. STREICHER)<br>* page 12, ligne 17 - page 14, ligne 25; figures 1, 3 * | 1 | |
| A | FR-A-1469212 (S.A. ANCIENS ETABLISSEMENTS RICHER-HUYEE)<br>* page 1, colonne 2, ligne 34 - page 2, colonne 1, ligne 8; figure 4 * | 1 | |
| A | FR-A-1409684 (SIEMENS-ELECTROGERATE AG) | | |
| A | DE-U-8429639 (WOLTERMANN) | | |
| A | DE-U-6753333 (SIEMENS-ELECTROGERATE GMBH) | | |

| DOMAINES TECHNIQUES RECHERCHES (Int. Cl.5 ) |
|---|
| A47J<br>B65D |

Le présent rapport a été établi pour toutes les revendications

| Lieu de la recherche | Date d'achèvement de la recherche | Examinateur |
|---|---|---|
| LA HAYE | 13 SEPTEMBRE 1990 | BODART P. |